# EUROPÄISCHE PATENTANMELDUNG

(11) **EP 1 605 189 A2**
(43) Veröffentlichungstag der Anmeldung: **14.12.2005**
(21) Anmeldenummer: 05012262.1
(22) Anmeldetag: 07.06.2005
(51) Int. Cl.: F16H 55/36

(54) **Vorrichtung zur Übertragung eines Drehmoments von einer Riemenscheibe auf eine Welle**

(30) Priorität: 07.06.2004 DE 102004027688
(71) Anmelder: Denso Automotive Deutschland GmbH, 85386 Eching (DE)
(72) Erfinder: Tolksdorf, Michael, 81669 München (DE); Wolf, Andreas, 84032 Altdorf (DE); Plötz, Michael, 85368 Moosburg (DE); Rilinger, Lars, 80936 München (DE); Kuhn, Dieter, 85283 Wolnzach (DE)
(74) Vertreter: Klingseisen, Franz

(57) **Zusammenfassung**

Die Erfindung betrifft verschiedene Vorrichtungen zur Unterdrückung der Schallentwicklung bei der Übertragung eines Drehmoments von einer Riemenscheibe (1) auf eine Welle (3) unter Zwischenschaltung einer schwingungsfähigen Mitnehmerscheibe (2), insbesondere für den Antrieb eines Kompressors einer Klimaanlage bei einem Kraftfahrzeug, wobei unter anderem über der schwingungsfähigen Mitnehmerscheibe (2) eine Abdeckkappe (6) vorgesehen ist.

## Beschreibung

Die Erfindung betrifft Vorrichtung zur Übertragung eines Drehmoments von einer Riemenscheibe auf eine Welle, insbesondere für den Antrieb eines Kompressors einer Klimaanlage in einem Kraftfahrzeug.

Es ist bekannt, an der Welle eines Kompressors einer Klimaanlage eine Mitnehmerscheibe aus Kunststoff zu befestigen, die über axial abstehende Fortsätze in Ausnehmungen einer Riemenscheibe eingreift, wobei zwischen Riemenscheibe und Mitnehmerscheibe Pufferelemente aus Gummi angeordnet sind. Die Mitnehmerscheibe ist mit Sollbruchstellen versehen, die bei Auftreten eines vorbestimmten Drehmoments brechen und die Verbindung zwischen Riemenscheibe und Welle unterbrechen. Bei Änderungen der Belastung des Kompressors oder auch durch Drehmomentschwankungen an der Riemenscheibe treten an der Mitnehmerscheibe Schwingungen auf, die zu einer Geräuschentwicklung führen.

Aufgabe der Erfindung ist es, derartige Geräuschentwicklungen zu unterbinden bzw. zu verhindern.

Diese Aufgabe wird erfindungsgemäß nach einer ersten Ausführungsform dadurch gelöst, dass über der Mitnehmerscheibe eine Abdeckung angebracht wird, die das Luftvolumen über der Mitnehmerscheibe begrenzt und abdeckt. Durch die Abdeckung und die Begrenzung des Luftvolumens über der Mitnehmerscheibe, das durch die Mitnehmerscheibe in Schwingungen versetzt wird, wird die Geräuschabgabe nach außen erheblich reduziert.

Nach einer zweiten Ausführungsform der Erfindung wird eine Geräuschentwicklung dadurch unterbunden bzw. wesentlich reduziert, dass die Mitnehmerscheibe in Achsrichtung verschiebbar auf der Welle angebracht ist, so dass die im Umfangsbereich der Mitnehmerscheibe auftretenden Schwingungen dazu führen, dass sich der Mittelbereich dcr Mitnehmerscheibe auf der Welle axial bewegt, wodurch die Schwingungen insgesamt derart reduziert werden, dass keine störende Geräuschentwicklung mehr auftritt.

Nach einer dritten Ausfühnmgsform der Erfindung wird zwischen Mitnehmerscheibe und Welle ein Freilauf derart vorgesehen, dass die Riemenscheibe nur in einer Drehrichtung ein Drehmoment auf die Kompressorwelle übertragen kann. Bei Auftreten einer Relativbewegung zwischen Welle und Riemenscheibe entgegen der Antriebsrichtung wird durch den Freilauf die Verbindung zwischen Riemenscheibe und Welle gelöst, wodurch Schwingungsbewegungen an der Mitnehmerscheibe unterbunden oder zumindest derart reduziert werden, dass eine Geräuschentwicklung nicht mehr auftritt.

Beispielsweise Ausführungsformen der Erfindung werden nachfolgend anhand der Zeichnung näher erläutert. Es zeigen
- Fig. 1: eine Stirnansicht einer Mitnehmerscheibe an einer Riemenscheibe,
- Fig. 2: einen Schnitt durch den Aufbau nach Fig. 1,
- Fig. 3: schematisch die Anbringung einer Abdeckkappe nach einer ersten Ausführungsform,
- Fig. 4: abgewandelte Bauformen der Befestigung der Abdeckkappe,
- Fig. 5: eine Schnittansicht einer zweiten Ausführungsform,
- Fig. 6: eine Stirnansicht der Buchse in Fig. 5,
- Fig. 7: eine schematische Schnittdarstellung einer abgewandelten Bauform der zweiten Ausführungsform, und
- Fig. 8: schematisch eine Schnittdarstellung einer dritten Ausführungsform.

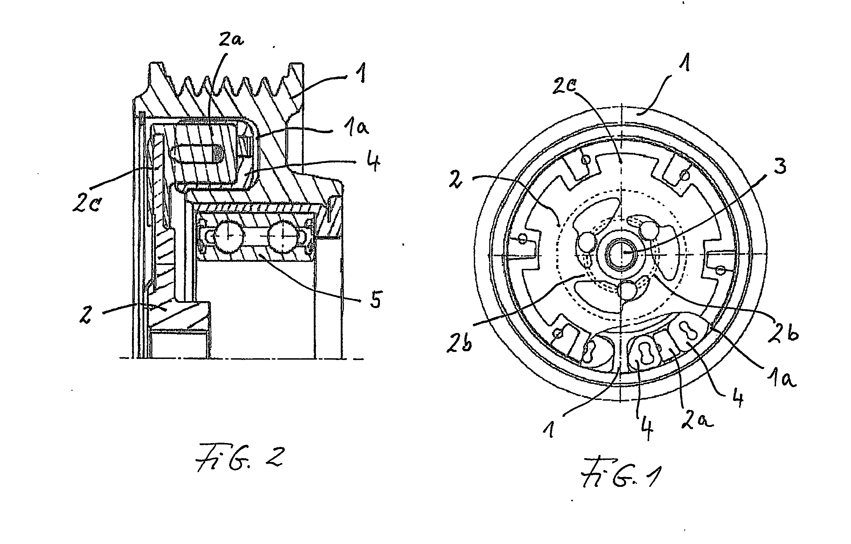

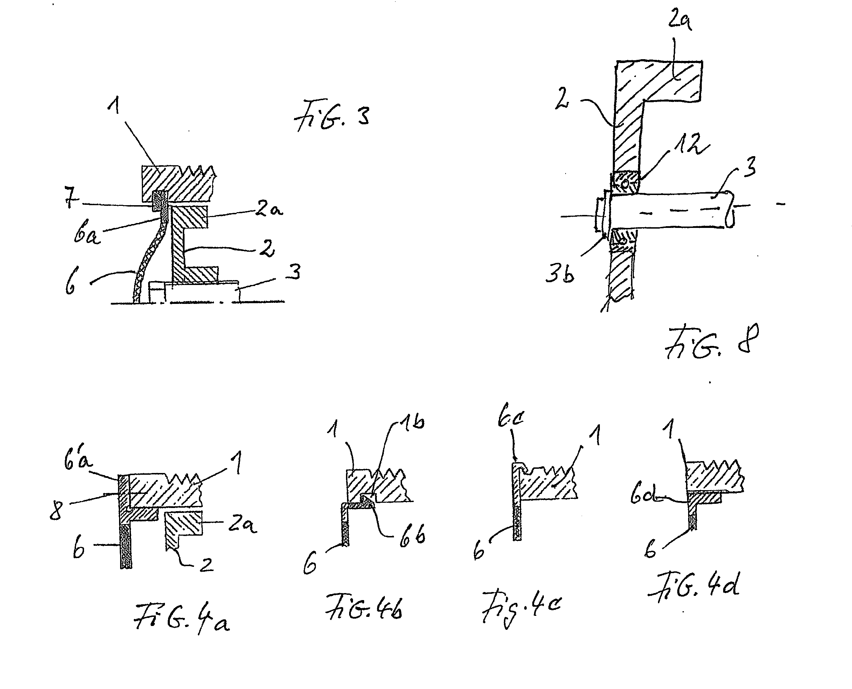

Fig. 1 und 2 zeigen eine an sich bekannte Bauform einer Riemenscheibe 1, die über eine Mitnehmerscheibe 2 mit einer Welle 3 eines nicht dargestellten Kompressors einer Klimaanlage für ein Fahrzeug verbunden ist. Axiale Fortsätze 2a im Außenumfangsbereich der Mitnehmerscheibe 2 greifen in Ausnehmungen 1 a der Riemenscheibe 1 ein, wobei Gummielemente 4 zwischen den Fortsätzen 2a der Mitnehmerscheibe 2 und der Riemenscheibe 1 angeordnet sind, die eine Relativbewegung zwischen Mitnehmerscheibe 2 und Riemenscheibe 1 abfedern. Mit 5 ist ein Lager in Fig. 2 bezeichnet, mittels dem die Riemenscheibe 1 auf dem nicht dargestellten Gehäuse des Kompressors drehbar gelagert ist. Die Mitnehmerscheibe 2 weist nahe dem Nabenbereich Sollbruchstellen 2b auf, die bei Auftreten eines bestimmten Drehmoments zwischen Riemenscheibe 1 und Welle 3, beispielsweise bei Blockieren des Kompressors, brechen und die Verbindung zwischen Welle 3 und Riemenscheibe 1 dauerhaft unterbrechen.

Die Mitnehmerscheibe 2 ist bei dieser bekannten Bauform starr mit der Welle 3 verbunden, beispielsweise durch Schrauben im Nabenbereich der Mitnehmerscheibe.

Wenn Änderungen des Drehmoments auftreten, das von der Riemenscheibe 1 auf die Welle 3 in Richtung der Pfeile in Fig. 7 übertragen wird, treten im Umfangsbereich 2c der Mitnehmerscheibe 2 Schwingungen auf, die zu einer periodischen Auslenkung des Umfangsbereichs 2c in Achsrichtung führen. Diese Schwingungsbewegung in Achsrichtung erzeugt ein Geräusch ähnlich einer schwingenden Membran eines Lautsprechers. Solche Schwingungen der Mitnehmerscheibe 2 können auch auftreten, wenn an der Kompressorwelle 3 pulsierende Bewegungen in Achsrichtung bei Belastungsänderungen des Kompressors entstehen, insbesondere bei einem Taumelscheibenkompressor.

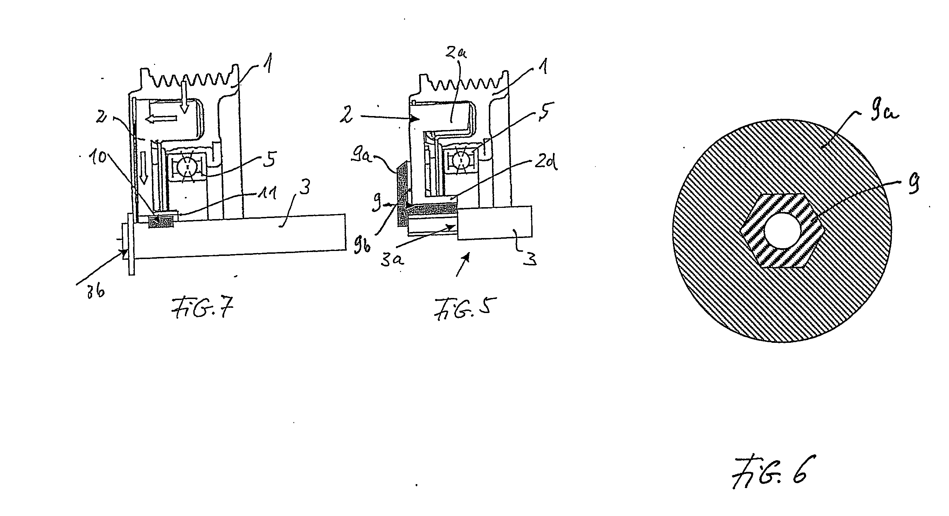

Nach der in den Fig. 3 und 4 schematisch wiedergegebenen ersten Ausführungsform der Erfindung wird auf der Außenseite der Mitnehmerscheibe 2 eine Abdeckkappe 6 angebracht, die ein Austreten von Schallwellen verhindert. Außerdem wird das Luftvolumen über der Mitnehmerscheibe 2 derart begrenzt, dass die schwingende Mitnehmerscheibe 2 kein größeres Luftvolumen mehr in Schwingung versetzen kann. Auf diese Weise wird sehr wirksam eine Geräuschabgabe nach außen verhindert.

Die Abdeckkappe 6 kann, wie Fig. 3 zeigt, beispielsweise mittels eines Federrings 7 an der Riemenscheibe 1 befestigt sein. Die Abdeckkappe selbst kann aus Kunststoff bestehen, wobei der Randbereich mit einem Metallring 6a versteift sein kann. Selbst eine Abdeckkappe aus einer Kunststofffolie reduziert das störende Geräusch deutlich.

Fig. 4 zeigt abgewandelte Bauformen der Befestigung der Abdeckkappe 6 an der Riemenscheibe 1. Fig. 4a zeigt einen Metallring 6'a mit etwa L-förmigem Querschnitt, der durch Schrauben 8 mit der Riemenscheibe 1 verbunden wird.

Fig. 4b zeigt eine Rastverbindung zwischen Riemenscheibe 1 und einer Rastnase 6b auf dem Umfang der Abdeckkappe 6, wobei die Rastnase auch nur auf Abschnitten auf dem Umfang vorgesehen sein kann. Die Rastnase greift in eine Nut 1b auf dem Innenumfang der Riemenscheibe ein.

Fig. 4c zeigt eine den Außenrand der Riemenscheibe 1 übergreifende Bördelung 6c der Abdeckkappe, die in eine Nut auf dem Außenumfang der Riemenscheibe 1 eingreift.

Fig. 4d zeigt eine Schraubverbindung zwischen Riemenscheibe 1 und Abdeckkappe 6, die mit einem auf dem Umfang mit einem Gewinde versehenen Ringkörper 6d verbunden ist, der mit einem Gewinde auf dem Innenumfang der Riemenscheibe 1 in Eingriff steht.

Die vorzugsweise aus Kunststoff bestehende Abdeckkappe 6 hat vorzugsweise einen schalldämmenden Aufbau. Beispielsweise können Hohlräume in der Querschnittsansicht der Abdeckkappe vorgesehen sein, die schalldämmend wirken.

Vorzugsweise ist die Abdeckkappe 6 geschlossen ausgebildet. Es ist aber auch möglich, im Bereich der Welle 3 eine Öffnung in der Abdeckkappe 6 vorzusehen. Hierdurch wird die Wirksamkeit der Abdeckkappe nicht beeinträchtigt, weil die Schwingungen an der Mitnehmerscheibe 2 in deren Außenumfangsbereich auftreten und das im Wellenbereich liegende Luftvolumen kaum in schallerzeugende Schwingungen versetzt wird. Auch kann der Abstand der Abdeckkappe vom Wellenumfang gering gehalten werden, so dass ein Schallaustritt unterbunden wird.

Die Anbringung einer Abdeckkappe 6 an der Riemenscheibe 1 ist insbesondere auch dafür geeignet, Riemenscheiben im Kraftfahrzeug nachzurüsten, um das Problem der Geräuschentwicklung zu unterbinden.

Die Abdeckkappe 6 kann auch an der Welle 3 befestigt sein, wobei ein geringer Spalt relativ zur Riemenscheibe 1 verbleibt. Hierbei wird die Abdeckkappe entsprechend steif ausgebildet, so dass sie nicht in Schwingungen versetzt werden kann.

Eine Abdeckkappe, die selbst nicht in Schwingungen versetzt wird, kann auch an der Mitnehmerscheibe befestigt sein. Dabei ist der erforderliche Luftspalt zur Riemenscheibe möglichst klein.

Bei Verwendung einer Abdeckkappe 6 kann ein sonstiger Spritzschutz an der Kupplung entfallen.

Fig. 5 und 6 zeigen schematisch eine zweite Ausführungsform der Erfindung, wobei zwischen Mitnehmerscheibe 2 und Welle 3 eine Relativbewegung in Achsrichtung möglich ist. Bei dem dargestellten Ausführungsbeispiel weist die Welle 3 im Endbereich einen Gewindeabschnitt 3a auf, auf den eine Buchse 9 aufgeschraubt ist, die auf dem Außenumfang eine Polygonform hat und mit einer komplementär geformten Ausnehmung in der Nabe 2d der Mitnehmerscheibe 2 in Eingriff steht, so dass in beiden Richtungen ein Drehmoment von der Riemenscheibe 1 auf die Welle 3 übertragen werden kann, die Mitnehmerscheibe 2 aber in Achsrichtung relativ zu der Welle 3 sich bewegen kann. Hierdurch werden die zuvor geschilderten Schwingungen an der Mitnehmerscheibe 2 durch die Axialbeweglichkeit des Nabenbereichs der Mitnehmerscheibe derart gedämpft, dass eine Geräuschentwicklung wirksam verhindert wird.

Bei dem dargestellten Ausführungsbeispiel der Buchse 9 ist ein radial abstehender Flansch 9a ausgebildet, der stirnseitig an der Mitnehmerscheibe 2 über ein eine axiale Beweglichkeit zulassendes Dämpfungselement 9b anliegen kann und zur Schwingungsdämpfung beiträgt. Die Buchse 9 kann auch über einen nicht dargestellten Sicherungsring auf der Welle gehalten werden.

Es kann auch der Endabschnitt der Welle 3 eine Polygonform haben, der mit der Mitnehmerscheibe 2 in Eingriff steht.

Fig. 7 zeigt schematisch eine Nut- und Federverbindung 10, 11 zwischen Mitnehmerscheibe 2, die durch einen Federring 3b auf der Welle gehalten wird, und der Welle 3. Die in eine Ausnehmung auf dem Wellenumfang eingesetzte Feder 10 ist in einer Axialnut 11 der Nabe der Mitnehmerscheibe 2 verschiebbar, so dass in beiden Drehrichtungen ein Drehmoment übertragen werden kann, aber eine Relativbewegung zwischen Mitnehmerscheibe 2 und Welle 3 in Achsrichtung möglich ist. Bei einer solchen Ausgestaltung kann die Feder 10 so ausgelegt werden, dass sie eine Einrichtung zur Begrenzung des übertragenen Drehmoments bildet. Beispielsweise können mehrere über den Umfang der Welle verteilte Federelemente 10 vorgesehen sein, deren Querschnitt den Sollbruchstellen 2b der Mitnehmerscheibe 2 in Fig. 1 entsprechen. Hierdurch können solche Querschnittsverminderungen 2b an der Mitnehmerscheibe 2 selbst entfallen.

Die Drehmomentbegrenzungseinrichtung kann auch in der Buchse 9 integriert werden.

Fig. 8 zeigt schematisch die Anordnung einer Freilaufeinrichtung 12 zwischen Welle 3 und Mitnehmerscheibe 2, die nur in einer Drehrichtung die Übertragung eines Drehmoments von der Riemenscheibe 1 auf die Welle 3 zulässt und in der entgegengesetzten Drehrichtung die Riemenscheibe 1 leer auf der Welle 3 laufen lässt. Hierdurch werden Schwingungen an der Mitnehmerscheibe 2 unterdrückt und damit auch eine Geräuschentwicklung. Die Freilaufeinrichtung 12 kann in an sich bekannter Weise ausgebildet sein, beispielsweise als Rollengesperre oder dergleichen.

Es ist auch möglich, die Überlastsicherung in die Freilaufeinrichtung 12 zu integrieren, so dass bei Auftreten eines erhöhten Drehmoments wenigstens ein Element der Freilaufeinrichtung bricht und damit die Drehmomentübertragung unterbrochen wird.

Die beschriebene Kupplung zwischen einer Riemenscheibe 1 und einer Welle 3 mittels einer schwingungsfähigen Mitnehmerscheibe 2 kann nicht nur bei einem Kompressor für eine Klimaanlage eines Kraftfahrzeugs, sondern auch bei anderen Einrichtungen verwendet werden, bei denen eine schwingungsfähige Mitnehmerscheibe zwischen einem Antriebselement, hier der Riemenscheibe 1, und einem angetriebenen Element, hier der Welle 3, zum Einsatz kommt.

## Patentansprüche

1. Vorrichtung zur Übertragung eines Drehmoments von einer Riemenscheibe (1) auf eine Welle (3) unter Zwischenschaltung einer schwingungsfähigen Mitnehmerscheibe (2), insbesondere für den Antrieb eines Kompressors einer Klimaanlage bei einem Kraftfahrzeug,
**dadurch gekennzeichnet,**
**dass** über der schwingungsfähigen Mitnehmerscheibe (2) eine Abdeckkappe (6) vorgesehen ist.

2. Vorrichtung nach Anspruch 1, wobei die Abdeckkappe (6) durch eine Schnapp- oder Schraubverbindung mit der Riemenscheibe (1) verbunden ist.

3. Vorrichtung nach Anspruch 1 oder 2, wobei die Abdeckkappe (6) im Bereich der Welle (3) eine mittige Öffnung aufweist.

4. Vorrichtung nach einem der Ansprüche 1 bis 3, wobei die Abdeckkappe (6) aus Kunststoff besteht.

5. Vorrichtung nach einem der Ansprüche 1 bis 4, wobei die Abdeckkappe (6) einen schalldämmenden Aufbau hat.

6. Vorrichtung zur Übertragung eines Drehmoments von einer Riemenscheibe (1) auf eine Welle (3) unter Zwischenschaltung einer schwingungsfähigen Mitnehmerscheibe (2), insbesondere für den Antrieb eines Kompressors einer Klimaanlage bei einem Kraftfahrzeug,
**dadurch gekennzeichnet,**
**dass** die Mitnehmerscheibe (2) auf der Welle (3) in Achsrichtung verschiebbar geführt ist.

7. Vorrichtung nach Anspruch 6, wobei auf der Welle (3) eine Buchse (9) befestigt ist, die auf dem Außenumfang einen Polygonquerschnitt aufweist, der mit einer entsprechenden Polygon-Ausnehmung im Nabenbereich der Mitnehmerscheibe (2) in Eingriff steht.

8. Vorrichtung nach Anspruch 6, wobei zwischen Mitnehmerscheibe (2) und Welle (3) eine Nut- und Federverbindung (10, 11) vorgesehen ist, die in Achsrichtung eine Relativbewegung zwischen Mitnehmerscheibe (2) und Welle (3) zulässt.

9. Vorrichtung nach einem der Ansprüche 6 bis 8, wobei eine Drehmomentbegrenzungseinrichtung in die Schiebeführung der Mitnehmerscheibe (2) auf der Welle (3) bzw. in die Buchse (8) integriert ist.

10. Vorrichtung zur Übertragung eines Drehmoments von einer Riemenscheibe (1) auf eine Welle (3) unter Zwischenschaltung einer schwingungsfähigen Mitnehmerscheibe (2), insbesondere für den Antrieb eines Kompressors einer Klimaanlage bei einem Kraftfahrzeug,
**dadurch gekennzeichnet,**
**dass** zwischen Mitnehmerscheibe (2) und Welle (3) eine Freilaufeinrichtung (12) angeordnet ist, die eine Drehmomentübertragung nur in einer Drehrichtung zulässt.

11. Vorrichtung nach Anspruch 10, wobei in der Freilaufeinrichtung (12) eine Überlastsicherung bzw. eine Sollbruchstelle integriert ist.
